# EUROPÄISCHE PATENTANMELDUNG

(11) **EP 0 980 046 A1**
(43) Veröffentlichungstag der Anmeldung: **16.02.2000**
(21) Anmeldenummer: 98115124.4
(22) Anmeldetag: 12.08.1998
(51) Int. Cl.: G06F 17/40

(54) **Messeinrichtung zur Ermittlung von physikalischen und/oder chemischen Eigenschaften von Gasen, Flüssigkeiten und/oder Feststoffen**

(71) Anmelder: Endress + Hauser Conducta Gesellschaft für Mess- und Regeltechnik mbH + Co., D-70839 Gerlingen (DE)
(72) Erfinder: Babel, Wolfgang, Dr., 71263 Weil der Stadt (DE)
(74) Vertreter: Dreiss, Fuhlendorf, Steimle & Becker

(57) **Zusammenfassung**

Es wird eine Messeinrichtung (1) zur Ermittlung von physikalischen und/oder chemischen Eigenschaften von Gasen, Flüssigkeiten und/oder Feststoffen beschrieben. Die Messeinrichtung (1) ist mit einer Recheneinheit (9) versehen, die mit einem Sensor (2, 3) gekoppelt ist. Die Recheneinheit (9) und der Sensor (2, 3) sind über ein Kommunikationsmedium (5) miteinander verbunden.

## Beschreibung

Die Erfindung betrifft eine Messeinrichtung zur Ermittlung von physikalischen und/oder chemischen Eigenschaften von Gasen, Flüssigkeiten und/oder Feststoffen mit einer Recheneinheit, die mit einem Sensor gekoppelt ist. Ebenfalls betrifft die Erfindung ein Verfahren zur Ermittlung von physikalischen und/oder chemischen Eigenschaften von Gasen, Flüssigkeiten und/oder Feststoffen, bei dem Messdaten von einem Sensor an eine Recheneinheit weitergegeben werden.

Eine derartige Messeinrichtung und ein derartiges Verfahren sind im Bereich der Messtechnik allgemein bekannt. Insbesondere für die Flüssigkeits- und/oder Gasanalyse können derartige Messeinrichtungen käuflich erworben werden.

Bei einer derartigen Messeinrichtung ist als Sensor beispielsweise ein pH-Wert-Sensor vorgesehen, der in eine zu analysierende Flüssigkeit eintaucht. Die von dem Sensor gemessenen Rohdaten werden von einer elektrischen Schaltung aufbereitet, um danach als Messdaten an die Recheneinheit weitergegeben zu werden. Mit Hilfe der Recheneinheit können die Messdaten beispielsweise auf einem angeschlossenen Monitor angezeigt oder an eine angeschlossene weitere Einheit, beispielsweise an eine Leitstelle oder dergleichen weitergeleitet werden.

Insbesondere bei größeren Industrieanlagen, beispielsweise bei Klärwerken oder dergleichen, sind eine Vielzahl von Sensoren vorgesehen, die an die Recheneinheit angeschlossen sind. Hierzu sind Verbindungskabel gelegt, über die die Messdaten übertragen werden. Die hierzu erforderlichen Kabelarbeiten stellen einen hohen Aufwand bei ihrer Herstellung wie auch bei ihrer Instandhaltung dar.

Aufgabe der Erfindung ist es, eine Messeinrichtung und ein Verfahren zur Ermittlung von physikalischen und/oder chemischen Eigenschaften von Gasen, Flüssigkeiten und/oder Feststoffen zu schaffen, das einen möglichst geringen Aufwand und damit geringe Kosten erfordert.

Diese Aufgabe wird bei einer Messeinrichtung der eingangs genannten Art erfindungsgemäß dadurch gelöst, dass die Recheneinheit und der Sensor über ein Kommunikationsmedium miteinander verbunden sind. Bei einem Verfahren der eingangs genannten Art wird die Aufgabe erfindungsgemäß dadurch gelöst, dass die Messdaten über ein Kommunikationsmedium übertragen werden.

Die Kabelverbindung bzw. die Kabelverbindungen zwischen dem Sensor bzw. den Sensoren und der Recheneinheit wird bzw. werden somit erfindungsgemäß durch ein Kommunikationsmedium ersetzt. Dies bedeutet, dass die gesamte Verkabelung nicht mehr vorhanden ist. Die für die Verkabelung erforderlichen Kabelarbeiten, wie auch deren Instandhaltung sind somit nicht mehr erforderlich. Dies stellt einen wesentlichen Vorteil im Hinblick auf die Herstellung der erfindungsgemäßen Messeinrichtung, wie auch im Hinblick auf deren Instandhaltung dar. Ebenfalls werden durch die nicht mehr erforderlichen Verkabelungen wesentliche Kosten bei der erfindungsgemäßen Messeinrichtung eingespart. Durch die erfindungsgemäße Übertragung der Messdaten über das Kommunikationsmedium wird somit ein wesentlicher Vorteil im Vergleich zu den bekannten, kabelgebundenen Messeinrichtungen erreicht.

Bei vorteilhaften Ausgestaltungen der erfindungsgemäßen Messeinrichtung bzw. des erfindungsgemäßen Verfahrens sind die Recheneinheit und der Sensor über eine Funkverbindung und/oder über eine Telefonverbindung und/oder über eine Internet- und/oder Intranetverbindung und/oder über eine einem Energienetz aufgeprägte Kommunikationsverbindung und/oder dergleichen miteinander verbunden. Die Messdaten werden also per Funk und/oder per Telefon und/oder per Internet und/oder per Intranet und/oder über ein Energienetz und/oder dergleichen übertragen.

Die Verbindung der Recheneinheit und des Sensors über das Kommunikationsmedium bzw. die Übertragung der Messdaten über das Kommunikationsmedium wird also mit Hilfe einer oder mehrerer der vorgenannten Möglichkeiten erreicht. Dabei besitzen die vorgenannten Möglichkeiten den Vorteil, dass sie als solche nicht vollständig neu erstellt werden müssen, sondern zumindest teilweise oder vollständig bereits vorhanden sind. So kann beispielsweise eine Übertragung der Messdaten per Telefon in einfacher Weise dadurch erreicht werden, dass auf beiden Seiten der Telefonstrecke ein Modem oder dergleichen vorgesehen ist, mit dessen Hilfe die Messdaten in das Telefonnetz eingespeist bzw. wieder abgegriffen werden. Derartige Modems sind bekannt und können kostengünstig im Handel erworben werden. Entsprechendes gilt für die Übertragung der Messdaten über das Internet oder ein Intranet.

Ein weiterer Vorteil der vorgenannten Möglichkeiten von Kommunikationsmedien besteht darin, dass beispielsweise bei einer Telefonverbindung oder einer Internetverbindung beliebige Orte miteinander verbunden werden können. Dies bedeutet, dass die Messdaten an jeden beliebigen Ort übertragen werden können. Im Vergleich zu der bekannten, kabelgebundenen Messeinrichtung stellt dies einen wesentlichen Vorteil im Hinblick auf die Flexibilität und Einsetzbarkeit der vorliegenden Erfindung dar.

Bei einer vorteilhaften Weiterbildung der Erfindung, bei der die Recheneinheit mit einer weiteren Einheit, beispielsweise einer Leitstelle oder dergleichen gekoppelt ist, sind die Recheneinheit und die weitere Einheit über ein Kommunikationsmedium miteinander verbunden. Zwischen der Recheneinheit und der weiteren Einheit werden somit über das Kommunikationsmedium Daten und/oder Programmpakete ausgetauscht.

Bei derartigen Daten- und/oder Programmpaketen kann es sich beispielsweise um Listen von Messdaten, um bereits verarbeitete Messdaten, um zu archivierende Messdaten oder dergleichen handeln, die von der Recheneinheit z. B. an die Leitstelle weitergegeben werden. Ebenfalls ist es möglich, dass es sich bei den Daten- und/oder Programmpaketen um Programme handelt, die von der Leitstelle an die Recheneinheit übermittelt werden, und die beispielsweise einen Update eines vorhandenen Programms in der Recheneinheit darstellen. Auch für die Übermittlung derartiger Daten- und/oder Programmpakete zwischen der Recheneinheit und der weiteren Einheit ist somit keine Verkabelung oder dergleichen erforderlich. Stattdessen werden diese Daten und/oder Programmpakete in einfacher Weise über das Kommunikationsmedium übertragen. Auch insoweit wird also die erfindungsgemäße Messeinrichtung wesentlich vereinfacht.

Vorteilhaft ist es, wenn die Recheneinheit und die weitere Einheit über eine Funkverbindung und/oder über eine Telefonverbindung und/oder über eine Internet- und/oder über eine Intranetverbindung und/oder über eine einem Energienetz aufgeprägte Kommunikationsverbindung miteinander verbunden sind. Die Daten- und/oder Programmpakete werden dann per Funk und/oder per Telefon und/oder per Internet oder per Intranet und/oder über ein Energienetz und/oder dergleichen übertragen.

Auf diese Weise werden - wie bereits erläutert - bereits vorhandene Kommunikationsmedien für die erfindungsgemäße Messeinrichtung ausgenützt. Dies bringt den Vorteil eines einfachen und kostengünstigen Aufbaus der Messeinrichtung mit sich.

Bei einer weiteren vorteilhaften Weiterbildung der erfindungsgemäßen Messeinrichtung sind mehrere Sensoren und/oder mehrere weitere Einheiten über jeweils einen Multiplexer oder dergleichen mit der Recheneinheit gekoppelt. Dabei können bekannte, handelsübliche Multiplexer bzw. Demultiplexer verwendet werden, die als Hardware-Produkt oder auch als Software-Modul erworben werden können. Mit Hilfe der Multiplexer bzw. Demultiplexer können dann die Messdaten und/oder die Daten- und/oder Programmpakete von den Sensoren an die Recheneinheit bzw. zwischen der Recheneinheit und der weiteren Einheit übertragen werden.

Besonders vorteilhaft ist es, wenn die Recheneinheit durch einen Personalcomputer realisiert ist. Es ist somit keine spezielle Recheneinheit erforderlich, die mit großem Aufwand erstellt werden muss. Stattdessen kann ein handelsüblicher Personalcomputer erworben und verwendet werden. Auf dem Personalcomputer können dann die Programmpakete installiert werden, die beispielsweise für die Auswertung der von den Sensoren erzeugten Messdaten erforderlich sind. Ebenfalls können auf dem Personalcomputer Programmpakete installiert werden, die beispielsweise zur Erzeugung von Listen der Messdaten oder dergleichen geeignet sind.

Der Personalcomputer kann auf einfache Weise beispielsweise mit einem Modem oder dergleichen versehen werden, mit dem die Übertragung der Messdaten von dem bzw. den Sensoren an den Personalcomputer bzw. von dem Personalcomputer an die weitere Einheit bzw. an die weiteren Einheiten erfolgen kann. Das Modem kann dazu vorgesehen sein, eine Telefonverbindung aufzubauen, ebenfalls ist es jedoch möglich, mit Hilfe des Modems eine Internet- und/oder Intranetverbindung herzustellen.

Durch die Verwendung des Personalcomputers werden somit sämtliche Möglichkeiten eröffnet, die im Zusammenhang mit einem derartigen Personalcomputer bereits vorhanden sind und käuflich erworben werden können. Die erfindungsgemäße Messeinrichtung kann damit auf einfache und kostengünstige Weise erweitert und an die jeweiligen Einsatzbedingungen angepasst werden.

Besonders zweckmäßig ist die Verwendung der erfindungsgemäßen Messeinrichtung bei der Flüssigkeits- und/oder Gasanalyse und/oder bei der Messung von Feuchte in Flüssigkeiten und/oder Gasen. Bei diesen Anwendungsgebieten machen sich die Vorteile der nicht mehr erforderlichen Verkabelung besonders deutlich bemerkbar.

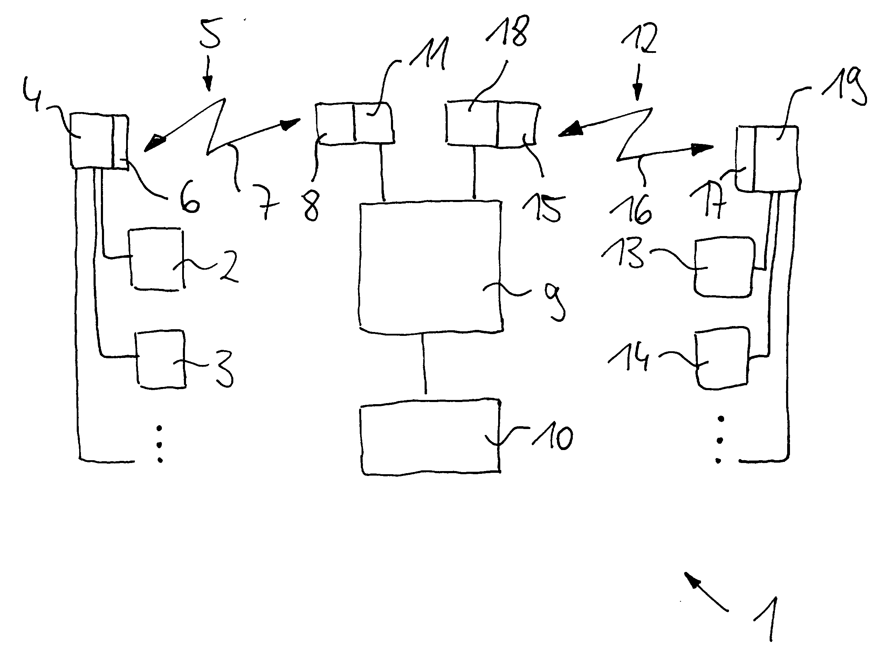

Weitere Merkmale, Anwendungsmöglichkeiten und Vorteile der Erfindung ergeben sich aus der nachfolgenden Beschreibung von Ausführungsbeispielen der Erfindung, die in der Zeichnung dargestellt sind. Dabei bilden alle beschriebenen oder dargestellten Merkmale für sich oder in beliebiger Kombination den Gegenstand der Erfindung, unabhängig von ihrer Zusammenfassung in den Patentansprüchen oder deren Rückbeziehung sowie unabhängig von ihrer Formulierung bzw. Darstellung in der Beschreibung bzw. in der Zeichnung.

Die einzige Figur der Zeichnung zeigt ein schematisches Blockdiagramm eines Ausführungsbeispiels einer erfindungsgemäßen Messeinrichtung.

In der Figur ist eine Messeinrichtung 1 dargestellt, die zur Ermittlung von physikalischen und/oder chemischen Eigenschaften von Gasen, Flüssigkeiten und/oder Feststoffen geeignet ist. Insbesondere kann die Messeinrichtung 1 bei der Flüssigkeits- und/oder Gasanalyse und/oder bei der Messung von Feuchte in Flüssigkeiten und/oder Gasen verwendet werden.

Die Messeinrichtung 1 ist mit einem oder mit mehreren Sensoren 2, 3 versehen. Bei diesen Sensoren kann es sich um Drucksensoren, Durchflusssensoren, Füllstandssensoren, pH-Wert-Sensoren, Trübungssensoren, Temperatursensoren, Sensoren zur Messung des Chlor- oder Chlordioxidgehalts, Sensoren zur Messung des Sauerstoffgehalts, Leitfähigkeitssensoren und/oder Feuchtesensoren handeln.

Die Sensoren 2, 3 sind dazu vorgesehen und geeignet, die ihnen jeweils zugeordneten Messdaten zu erzeugen. Ggf. sind den Sensoren 2, 3 elektrische Schaltungen zugeordnet, die zur Umsetzung der von den Sensoren unmittelbar gemessenen Rohdaten in die genannten Messdaten vorgesehen sind. An den Ausgängen der Sensoren 2, 3 werden die jeweiligen Messdaten von den Sensoren 2, 3 zur Verfügung gestellt.

Die Messeinrichtung 1 weist einen Multiplexer 4 auf, an den die Sensoren 2, 3 angeschlossen sind. Der Multiplexer 4 ist dazu vorgesehen, die Messdaten der Sensoren 2, 3 nacheinander abzufragen und in ein gemeinsames Signal umzuformen.

Dem Multiplexer 4 ist ein Kommunikationsmedium 5 nachgeordnet, das ein Bauteil 6, eine Übertragungsstrecke 7 und ein Bauteil 8 aufweist.

Bei dem Kommunikationsmedium 5 kann es sich beispielsweise um eine Funkverbindung handeln. In diesem Fall ist das Bauteil 6 mit einem Sender und das Bauteil 8 mit einem Empfänger versehen. Über die Übertragungsstrecke 7 kann dann das gemeinsame, aus den Messdaten der Sensoren 2, 3 zusammengesetzte Signal des Multiplexers 4 von dem Sender 6 an den Empfänger 8 übertragen werden.

Ebenfalls ist es möglich, dass es sich bei dem Kommunikationsmedium 5 um eine Telefonverbindung oder um eine Internetverbindung handelt. In diesem Fall weisen die Bauteile 6 und 8 jeweils beispielsweise ein Modem oder dergleichen auf. Das gemeinsame, aus den Messdaten der Sensoren 2, 3 zusammengesetzte und von dem Multiplexer 4 erzeugte Signal kann dann über die Übertragungsstrecke 7 zwischen den beiden Modems übertragen werden. Bei einem derartigen Kommunikationsmedium 5 ist praktisch eine weltweite Übertragung möglich.

Handelt es sich bei dem Kommunikationsmedium 5 um eine Telefonverbindung, so können die Messdaten beispielsweise über eine Telefon-Standleitung fortlaufend übertragen werden. Handelt es sich bei dem Kommunikationsmedium um eine Internetverbindung, so erfolgt eine Umwandlung der Messdaten in entsprechende digitale Signale, die dann über das elektronische Netzwerk des Internet übertragen werden. Während bei einer Telefonverbindung ein sogenannter Echtzeitbetrieb möglich ist, ist dies bei einer Internetverbindung ggf. nicht ohne Weiteres möglich.

Ebenfalls ist es möglich, dass als Kommunikationsmedium 5 eine Kommunikationsverbindung über ein vorhandenes Energienetz aufgebaut wird. In diesem Fall werden die zu übertragenden Signale von den Bauteilen 6 bzw. 8 in hochfrequente Signale umgesetzt, die auf das vorhandene Energienetz aufgeprägt werden. Bei einem derartigen Kommunikationsmedium 5 ist eine Übertragung der Messdaten innerhalb des vorhandenen Energienetzes möglich.

Die Messeinrichtung 1 weist eine Recheneinheit 9, insbesondere einen Personalcomputer auf. Die Recheneinheit 9 ist mit einem Interface 10, insbesondere mit einem Monitor und einer Tastatur versehen. Ebenfalls ist mit der Recheneinheit 9 ein Demultiplexer 11 gekoppelt, der dem Bauteil 8 zugeordnet ist.

Die von dem Bauteil 8 empfangenen Signale werden von dem Demultiplexer 11 wieder aufgeschlüsselt und in die Messdaten der Sensoren 2, 3 umgesetzt. In der Recheneinheit 9 liegen somit die Messdaten der Sensoren 2, 3 wieder vor. Diese Messdaten der Sensoren 2, 3 können von der Recheneinheit 9 in beliebiger Weise aufbereitet werden.

Der Multiplexer 4, wie auch der Demultiplexer 11 können als Hardware-Bauteile, wie auch als Software-Module vorhanden sein. Ebenfalls ist es möglich, dass der Multiplexer 4 und der Demultiplexer 11 dazu geeignet sind, eine Übertragung in Gegenrichtung, also von der Recheneinheit 9 zu den Sensoren 2, 3 durchzuführen.

Das Bauteil 8 kann als Steckkarte der Recheneinheit 9, insbesondere des Personalcomputers ausgestaltet sein. Insbesondere bei einer Telefonverbindung oder einer Internetverbindung kann es sich bei dem Bauteil 8 um ein einsteckbares Modem handeln.

Bei dem Multiplexer 4 und dem Bauteil 6 kann es sich um eine prozessorgesteuerte Sendeeinheit handeln, die ggf. auch aus einem Personalcomputer mit einem eingesteckten Modem besteht.

Es versteht sich, dass im Falle des Vorhandenseins nur eines einzigen Sensors kein Multiplexer bzw. Demultiplexer vorhanden sein muss. In diesem Fall ist der einzige Sensor direkt über das Kommunikationsmedium 5 mit der Recheneinheit 9 verbunden.

Die Recheneinheit 9 ist über ein weiteres Kommunikationsmedium 12 mit einer oder mit mehreren weiteren Einheiten 13, 14 gekoppelt. Bei diesen weiteren Einheiten 13, 14 kann es sich um eine Leitstelle, um einen sogenannten Profibus oder dergleichen handeln. Ebenfalls ist es möglich, dass es sich bei der weiteren Einheit 13, 14 um eine Steuerung oder dergleichen handelt, mit der ein Prozess, beispielsweise das zu analysierende Gas bzw. die zu analysierende Flüssigkeit gesteuert und/oder geregelt wird.

Das Kommunikationsmedium 12 weist ein Bauteil 15, eine Übertragungsstrecke 16 und ein Bauteil 17 auf. Mit dem Bauteil 15 ist ein Multiplexer/Demultiplexer 18 verbunden, der an die Recheneinheit 9 angeschlossen ist. Mit dem Bauteil 17 ist ein Multiplexer/Demultiplexer 19 verbunden, an den die weiteren Einheiten 13, 14 angeschlossen sind.

Bei dem Kommunikationsmedium 12 kann es sich um eine Telefonverbindung, eine Internet- und/oder Intranetverbindung, eine Kommunikationsverbindung über ein Energienetz oder dergleichen handeln. Die Bauteile 15 und 17 können dabei beispielsweise als Modems oder dergleichen ausgebildet sein.

Die Multiplexer/Demultiplexer 18, 19 können als Hardware-Bauteile oder als Software-Module vorhanden sein.

Mit Hilfe des Kommunikationsmediums 12 und der Multiplexer/Demultiplexer 18, 19 können Daten- und/oder Programmpakete per Funk und/oder per Telefon und/oder per Internet und/oder per Intranet und/oder über das Energienetz von der Recheneinheit 9 zu den weiteren Einheiten 13, 14 bzw. in Gegenrichtung übertragen werden. Bei den genannten Daten- und/oder Programmpaketen kann es sich um aufbereitete Messdaten, beispielsweise um Listen von Messdaten oder dergleichen handeln, wie auch um Programme, die von den weiteren Einheiten 13, 14 in die Recheneinheit 9 eingespielt werden.

Ist nur eine weitere Einheit 13, 14 vorhanden, so versteht es sich, dass die Multiplexer/Demultiplexer 18, 19 nicht vorhanden sein müssen. In diesem Fall werden die Daten- und/oder Programmpakete direkt von der Recheneinheit 9 über das Kommunikationsmedium 12 zu der weiteren Einheit 13 bzw. in Gegenrichtung übertragen.

Handelt es sich bei dem Kommunikationsmedium 12 um eine Telefonverbindung oder um eine Internetverbindung, so können die dazu erforderlichen Modems wieder als Steckkarten beispielsweise in die Recheneinheit 9, insbesondere in den Personalcomputer eingesteckt werden.

Im Betrieb der beschriebenen Messeinrichtung 1 werden die von den Sensoren 2, 3 erzeugten Messdaten über das Kommunikationsmedium 5 an die Recheneinheit 9 übertragen. Dort werden die Messdaten aufbereitet bzw. weiter verarbeitet. Von der Recheneinheit 9 erzeugte Datenpakete werden dann über das Kommunikationsmedium 12 an die weitere Einheit 13 bzw. an die weiteren Einheiten 13, 14 übermittelt. Von diesen weiteren Einheiten 13, 14 können ebenfalls durch die letztgenannte Übertragung ein Update von Programmen in der Recheneinheit 9 durchgeführt werden.

## Patentansprüche

1. Messeinrichtung (1) zur Ermittlung von physikalischen und/oder chemischen Eigenschaften von Gasen, Flüssigkeiten und/oder Feststoffen mit einer Recheneinheit (9), die mit einem Sensor (2, 3) gekoppelt ist, **dadurch gekennzeichnet**, daß die Recheneinheit (9) und der Sensor (2, 3) über ein Kommunikationsmedium (5) miteinander verbunden sind.

2. Messeinrichtung (1) nach Anspruch 1, dadurch gekennzeichnet, daß die Recheneinheit (9) und der Sensor (2, 3) über eine Funkverbindung und/oder über eine Telefonverbindung und/oder über eine Internet- und/oder Intranetverbindung und/oder über eine einem Energienetz aufgeprägte Kommunikationsverbindung und/oder dergleichen miteinander verbunden sind.

3. Messeinrichtung (1) nach einem der Ansprüche 1 oder 2, bei der die Recheneinheit (9) mit einer weiteren Einheit (13, 14), beispielsweise einer Leitstelle odgl. gekoppelt ist, dadurch gekennzeichnet, daß die Recheneinheit (9) und die weitere Einheit (13, 14) über ein Kommunikationsmedium (12) miteinander verbunden sind.

4. Messeinrichtung (1) nach Anspruch 3, dadurch gekennzeichnet, daß die Recheneinheit (9) und die weitere Einheit (13, 14) über eine Funkverbindung und/oder über eine Telefonverbindung und/oder über eine Internet- und/oder Intranetverbindung und/oder über eine einem Energienetz aufgeprägte Kommunikationsverbindung und/oder dergleichen miteinander verbunden sind.

5. Messeinrichtung (1) nach einem der vorstehenden Ansprüche, dadurch gekennzeichnet, daß mehrere Sensoren (2, 3) und/oder mehrere weitere Einheiten (13, 14) über jeweils einen Multiplexer (4, 11, 18, 19) odgl. mit der Recheneinheit (9) gekoppelt sind.

6. Messeinrichtung (1) nach einem der vorstehenden Ansprüche, dadurch gekennzeichnet, daß die Recheneinheit (9) durch einen Personalcomputer realisiert ist.

7. Messeinrichtung (1) nach einem der vorstehenden Ansprüche, gekennzeichnet, durch die Verwendung bei der Flüssigkeits- und/oder Gasanalyse und/oder bei der Messung von Feuchte in Flüssigkeiten und/oder Gasen.

8. Messeinrichtung (1) nach einem der vorstehenden Ansprüche, gekennzeichnet, durch die Verwendung von einem oder mehreren der nachstehenden Sensoren: Drucksensor, Durchflußsensor, Füllstandssensor, pH-Wert-Sensor, Trübungssensor, Temperatursensor, Sensor zur Messung des Chlor- oder Chlordioxigehalts, Sensor zur Messung des Sauerstoffgehalts, Leitfähigkeitssensor, Feuchtesensor.

9. verfahren zur Ermittlung von physikalischen und/oder chemischen Eigenschaften von Gasen, Flüssigkeiten und/oder Feststoffen, bei dem Messdaten von einem Sensor (2, 3) an eine Recheneinheit (9) weitergegeben werden, dadurch gekennzeichnet, daß die Messdaten über ein Kommunikationsmedium (5) übertragen werden.

10. verfahren nach Anspruch 9, dadurch gekennzeichnet, daß die Messdaten per Funk und/oder per Telefon und/oder per Internet und/oder per Intranet und/oder über ein Energienetz und/oder dergleichen übertragen werden.

11. Verfahren nach einem der Ansprüche 9 oder 10, bei dem Daten- und/oder Programmpakete von der Recheneinheit (9) an eine weitere Einheit (13, 14) weitergegeben werden, dadurch gekennzeichnet, daß die Daten- und/oder Programmpakete über ein Kommunikationsmedium (12) übertragen werden.

12. Verfahren nach Anspruch 11, dadurch gekennzeichnet, daß die Daten- und/oder Programmpakete per Funk und/oder per Telefon und/oder per Internet und/oder per Intranet und/oder über ein Energienetz und/oder dergleichen übertragen werden.
